# EUROPEAN PATENT APPLICATION

(11) **EP 0 900 830 A1**
(43) Date of publication of application: **10.03.1999**
(21) Application number: 98306968.3
(22) Date of filing: 28.08.1998
(51) Int. Cl.: C09D 11/00

(54) **Ultraviolet fluorescent ink for non-contact ink jet printers**

(30) Priority: 08.09.1997 US 925404
(71) Applicant: Scitex Digital Printing, Inc., Dayton, Ohio 45420-4099 (US)
(72) Inventor: Bhatt, Bipin G., Dayton, Ohio 45431 (US)
(74) Representative: Freed, Arthur Woolf

(57) **Abstract**

An ink jet ink composition comprises a liquid vehicle and a water soluble dye having a fluorescent property. The fluorescent property in this ink jet ink composition comprises a fluorescing brightener and results in an ink which is invisible to the human eye when exposed to normal daylight or incandescent light conditions, yet visible as a fluorescent image when exposed to ultraviolet lighting, and can be used in ink jet printers.

## Description

### Technical Field

The present invention relates to aqueous liquid inks which are semi-waterfast when applied and, more particularly, to water soluble inks which are formulated to be invisible under normal daylight or incandescent light, but fluorescent when exposed to ultraviolet light.

### Background Art

In continuous ink jet printing, ink is supplied under pressure to a manifold region that distributes the ink to a plurality of orifices, typically arranged in a linear array(s). The ink discharges from the orifices in filaments which break into droplet streams. The approach for printing with these droplet streams is to selectively charge and deflect certain drops from their normal trajectories. Graphic reproduction is accomplished by selectively charging and deflecting drops from the drop streams and depositing at least some of the drops on a print receiving medium while other of the drops strike a drop catcher device. The continuous stream ink jet printing process is described, for example, in U.S. Pat. Nos. 4,255,754; 4,698,123 and 4,751,517, the disclosures of each of which are totally incorporated herein by reference.

For a variety of reasons, many documents and items are printed with coded methods like bar codes. Such coded print is visible to the eye and aesthetically not pleasant. However, in many instances, the coded image is deemed vital to the decoder or certain readers of the document, but is not necessary for the end user. For example, it may be desirable to have a bar code or other security code, a logo, a watermark, etc., for various identification purposes, but it is also desirable to not damage the aesthetic appearance of the document. This is often the case when clearing checks, verifying lottery tickets, printing sensitive coded information, etc.

As a further example, many retail businesses send personalized mass mailings to customers. These mass mailings may contain advertising and other offer information that needs to be readily read. When customers return mailings with acceptances or in part, rejections of offers, the returned mailings need to be validated and/or sorted before responses can be made to acceptances and partial rejections. Because of the large volume of mail that can be involved, such sorting needs to be automated. Pragmatically, this necessity for automation should be effected, if at all possible, without imposing an impersonal appearance to the mailings that could unfavorably prejudice readers.

The guarding of document security occasions additional problems, such as identifying those documents, and restricting movement of those documents within a facility. An associated situation arises with the use of markings such as a watermark used on valuable documents to prevent counterfeiting or copying for use as an original. Obviously, it is undesirable to have the watermark visible in the normal use of the document, but highly desirable to make the watermark readily visible during unauthorized use or alteration of the document.

It is seen then that there exists a need for an ink which is not visible to the human eye under normal daylight or incandescent light conditions, but is fluorescent when exposed to ultraviolet lighting, on the order of 190 nm to 400 nm. It is further seen that there is a need for such an ink which can print images without damage to the aesthetic appearance of the document.

### Summary of the Invention

This need is met by the waterbased ink composition according to the present invention, which is formulated to be invisible to the eye but fluorescent under ultraviolet (UV) light.

In accordance with one aspect of the present invention, an ink jet ink composition comprises a liquid vehicle, and a water soluble dye with a fluorescent brightener property. The ink is water based and environmentally friendly. The ink composition may further comprise colorant, corrosion inhibitor to protect printer components, biocide to prevent microbial growth, buffered pH modifier, surfactant(s) to create desired print quality and drying properties, and humectant to minimize crystallizing or drying of fluid on the system components.

Other objects and advantages of the invention will be apparent from the following description and the appended claims.

### Detailed Description of the Invention

The ink jet ink composition of the present invention comprises water soluble fluorescent brightener dye in conjunction with a liquid vehicle, the liquid vehicle preferably comprising a blend of water, surfactant(s) and cosolvent(s). The resultant ink is a water based environmentally friendly ink which when printed is not visible to the human eye under normal daylight or incandescent light conditions, but is fluorescent when exposed to ultraviolet lighting, typically on the order of approximately 190 nm to 400 nm.

The ink composition of the present invention, comprising a fluorescent whitening agent, cosolvent and surfactant content, produces an ink which prints a coded image without damage to the aesthetic appearance of the document. The liquid vehicle may be selected from the group consisting of a cosolvent, a surfactant, a humectant, a wetting agent, an antimicrobial agent or biocide, a pH modifier, a corrosion inhibitor, deionized water, and mixtures thereof.

The dye in the ink jet ink composition of the present invention is a water soluble fluorescent brightener type of dye. In a preferred embodiment of the present invention, the dyes are classified as fluorescent brighteners or fluorescent whitening agents selected from the group consisting of fluorescing dyes and fluorescing brighteners. In general, the concentration of the dye should be up to 5% by weight, depending on the desired degree of fluorescence or reflectance of the printed image. In particular, the dye is selected from the group consisting of: Stilbene derivatives, such as Di- to Hexa-sulfonic Acid, sodium, potassium or amino derivatives; Coumarin and carbostyril compounds; 1,3-Diphenyl-2-Pyrazolines; Naphtalimides; Benzazolyl substitution products of ethylene, phenylethyene, stilbene and thiophene; combined heteroaromatics with ethylene or aromatic systems; or mixtures of these dyestuff types.

Examples of commercially available dyes of the aforementioned structures include, but are not limited to, Uvitex which is commercially available from CIBA; Burcofluor, which is commercially available from Burlington Chemical Co.; Ranipal, which is commercially available from Sunrays Corporation; Morwhite, which is commercially available from Morlot Color and Chemical Co., Inc.; Leucophor, which is commercially available from Clariant Corp.; Kisc White, which is commercially available from Crompton & Knowles Colors, Inc.; and Fibrite, which is commercially available from Shymac International, Inc.

In a preferred embodiment of the ink composition of the present invention, water comprises 90% or more by weight of the ink composition; the cosolvents are present in a range up to about 3% by weight; the humectant is present in a range of about 0.5% to 2% by weight; the corrosion inhibitor, antimicrobial agent, and surfactants are all present in the less than 1.0% by weight range; the pH modifier and/or buffer(s) are present in the range of about 1% to 2% by weight; and the water soluble dye, represented by but not limited to soluble stilbene derivatives, are present in the approximately 0.1% to 5% by weight range. The lower range is defined by the amount needed to lower image intensity. Higher content levels could be used, but may result in image readability under normal light.

An ink made in accordance with the present invention may be manufactured as follows:

### PREPARATION OF INK

### Example I

The following is one embodiment of a water based recording fluid for use with continuous ink jet printers, prepared in accordance with the present invention.

| Component | |
|---|---|
| % Weight | |
| Water | 96.05 |
| Corrosion Inhibitor(s) | 0.1 |
| Antimicrobial Agent | 0.1 |
| pH Modifier(s) and/or buffer(s) | 1.1 |
| Cosolvent (s) | 1.25 |
| Surfactant(s) | 0.4 |
| Water Soluble Dye | 1.0 |
| | 100.00 |

When the ink composition was formulated as above in accordance with the present invention, the ink was used in a continuous ink jet printer, such as the type manufactured by Scitex Digital Printing, Inc., in Dayton, Ohio, to test its image quality on publication substrates. The prints generated using the ink formulated in accordance herewith produced uniform high quality images invisible to the human eye when exposed to normal daylight or incandescent light conditions, but visible as fluorescent images when exposed to UV lighting.

In accordance with the present invention, in Example I above, the corrosion inhibitor is preferably benzo or tolyltriazole; the antimicrobial biocide used is preferably benzisothiazolin; the surfactant(s) are preferably mixtures of acetylene diols; the pH modifier(s) and/or buffer(s) are preferably organic and inorganic acids and alkalies; the cosolvent(s) are preferably of the glycols classes; and the water soluble dye is preferably fluorescent brightener #357 or fluorescent whitening agent.

In accordance with the present invention, tests were conducted to identify the range of water soluble fluorescent dye content required to achieve the desired results. The range of water soluble fluorescent dye content required was based on non-readability in room light with fluorescent lamps and the optimum operating conditions of the ink jet printing system. The results of these are shown below in Examples II through IV.

### Example II

The following is one embodiment of a water based recording fluid for use with continuous ink jet printers, prepared in accordance with the present invention.

| Component | |
|---|---|
| % Weight | |
| Water | 95.05 |
| Corrosion Inhibitor(s) | 0.1 |
| Antimicrobial Agent | 0.1 |
| pH Modifier(s) and/or buffer(s) | 1.1 |
| Cosolvent (s) | 1.25 |
| Surfactant(s) | 0 .4 |
| Water Soluble Dye | 2.0 |
| | 100.00 |

When the ink composition was formulated as above in accordance with the present invention, the ink was used in a continuous ink jet printer, such as the type manufactured by Scitex Digital Printing, Inc., in Dayton, Ohio, to test its image quality on publication substrates. The prints generated using the ink formulated in accordance herewith produced uniform high quality images invisible to the human eye when exposed to normal daylight or incandescent light conditions, but visible as fluorescent images when exposed to UV lighting.

### Example III

The following is another embodiment of a water based recording fluid tested for use with continuous ink jet printers, prepared in accordance with the present invention.

| Component | |
|---|---|
| % Weight | |
| Water | 96.55 |
| Corrosion Inhibitor(s) | 0.1 |
| Antimicrobial Agent | 0.1 |
| pH Modifier(s) and/or buffer(s) | 1.1 |
| Cosolvent (s) | 1.25 |
| Surfactant(s) | 0 .4 |
| Water Soluble Dye | 0.5 |
| | 100.00 |

Ink formulated in accordance with Example III above, comprising less than 1% of the dye, did not give as easy image recognition when the image is exposed to UV light, as the ink formulated in accordance with Examples I and II above.

### Example IV

| Component | |
|---|---|
| % Weight | |
| Water | 93.55 |
| Corrosion Inhibitor(s) | 0.1 |
| Antimicrobial Agent | 0.1 |
| pH Modifier(s) and/or buffer(s) | 1.1 |
| Cosolvent(s) | 1.25 |
| Surfactant(s) | 0 .4 |
| Water Soluble Dye | 3.5 |
| | 100.00 |

Ink formulated in accordance with Example IV above, comprising more than 3.5% of the dye, can result in ink with a viscosity and image visibility that may be undesirable. Furthermore, increased amounts of the dye can make the printed image visible under normal light.

It will be understood by those skilled in the art that the optimum amount of dye in the ink concentration is dependent on the selected absorbance commodity and the substrate used for printing. The optimum dye concentration will be that amount of dye which renders the printed image invisible to the eye under normal lighting conditions, and clearly visible when exposed to ultraviolet light. Typically, the optimum dye concentration is between 1% and 2% by weight of the ink composition.

In the Examples above, the ink in Examples I and II performed exceptionally well. A preferred embodiment of the ink composition according to the present invention, therefore, comprises (1) 90% or more by weight water; (2) cosolvents in a range up to about 3% by weight, since ink with 0% lacks homactancy, causing the ink to dry in the orifices and clog, and greater than 3% retards image drying and may create offset on superimposed substrates; (3) corrosion inhibitor in a range of 0.1% to 0.2% by weight since less than 0.1% does not adequately protect the system components, as the inks are then conductive, and greater than about 0.2% may adversely influence fluid stability or system performance without providing additional advantage; antimicrobial agent in a range of 0.1% to 0.2% by weight, since less than about 0.1% may not prevent microbial growth, and greater than about 0.2% might interfere with the runnability of the ink jet system without providing additional protection; surfactants in a range of 0.1% to 0.2% by weight since too little surfactant content will not allow desired wettability of the orifice plate and too much surfactant content will create high feathering and poor image quality; pH modifier and/or buffer(s) in a range of about 1% to 2% by weight to properly control the acidic/alkaline pH and absorption of CO₂ from the air; and fluorescent water soluble dye in a range of about 1% to 2% by weight, since less than 1% may not allow for the desired image recognition with an image detection device, and more than 2% may make the image visible under normal fluorescent light bulbs used in room lighting.

The use of fluorescent water soluble dye in conjunction with a carefully selected blend of surfactants and cosolvents results in an ink according to the present invention, which is invisible to the human eye when exposed to normal daylight or incandescent light conditions, yet visible as a fluorescent image when exposed to UV lighting.

### Industrial Applicability and Advantages

The present invention is useful in the field of ink jet printing, and has the advantage of formulating a semi-waterfast aqueous liquid ink for use in ink jet printing systems. In particular, the ink in accordance with the present invention is formulated to be invisible under normal lighting conditions, but fluorescent when exposed to ultraviolet light.

The invention has been described in detail with particular reference to certain preferred embodiments thereof, but it will be understood that modifications and variations can be effected within the spirit and scope of the invention.

## Claims

1. An ink jet ink composition comprising a liquid vehicle and a water soluble dye with a fluorescent property.

2. An ink jet ink composition as claimed in claim 1 wherein the fluorescent property comprises a fluorescing brightener.

3. An ink jet ink composition as claimed in claim 1 wherein the water soluble dye is selected from the group consisting of stilbene derivatives, coumarin and carbostyril compounds, 1,3-Diphenyl-2-Pyrazolines, naphtalimides; benzazolyl substitution products of ethylene, phenylethyene, stilbene and thiophene, combined heteroaromatics with ethylene or aromatic systems, and mixtures thereof.

4. An ink jet ink composition as claimed in claim 1 wherein the fluorescent property of the water soluble dye is present in an amount sufficient to make the ink jet ink composition invisible except to ultraviolet light exposure.

5. An ink jet ink composition as claimed in claim 1 wherein the water soluble dye is present in an amount up to about 5 percent by weight.

6. An ink jet ink composition as claimed in claim 1 wherein the water soluble dye is present in an amount from about 0.5 to 2 percent by weight.

7. An ink jet ink composition as claimed in claim 1 wherein the liquid vehicle is selected from the group consisting of a cosolvent, a surfactant, a wetting agent, deionized water, and mixtures thereof.

8. An ink jet ink composition as claimed in claim 1 further comprising a corrosion inhibitor, an antimicrobial agent, a pH modifier and a humectant.

9. A process for generating images which comprises incorporating into an ink jet printing apparatus the ink composition of claim 1 and forming images by causing the ink to be expelled in droplets onto a substrate, thereby generating an image on the substrate.

10. A process as claimed in claim 9 wherein the image is generated by a continuous stream ink jet printing process.
